# EUROPEAN PATENT SPECIFICATION

(11) **EP 1 356 637 B1**
(45) Date of publication and mention of the grant of the patent: **16.12.2009**
(21) Application number: 02715943.3
(22) Date of filing: 21.01.2002
(51) Int. Cl.: H04L 12/28, H04M 3/42

(54) **METHOD AND DEVICE FOR CREATING CUSTOMER ADAPTED PROVISIONS OF SERVICES AT TELECOMMUNICATION NETWORK**
VERFAHREN UND EINRICHTUNG ZUR ERZEUGUNG VON KUNDENANGEPASSTEN BEREITSTELLUNGEN VON DIENSTEN IN EINEM TELEKOMMUNIKATIONSNETZ
PROCEDE ET DISPOSITIF DE CREATION DE PRESTATIONS DE SERVICES CONCUS POUR LE CONSOMMATEUR SUR UN RESEAU DE TELECOMMUNICATION

(30) Priority: 22.01.2001 SE 0100167
(43) Date of publication of application: 29.10.2003
(73) Proprietor: TELIASONERA AB, 106 63 Stockholm (SE)
(72) Inventor: HOROWITZ, Bruce, S-149 41 Nynäshamn (SE); STERNBERG, Camilla, 149 91 Nynäshamn (SE); ERIKSSON, Lars, SE-121 44 Johanneshov (SE); LINDBERG, Eva, S-149 45 Nynäshamn (SE); KLACK, Niclas, S-149 43 Nynäshamn (SE); MAGNUSSON, Nils-Göran, S-149 45 Nynäshamn (SE); ALM, Karna, SE-226 54 Lund (SE); JOHANSSON, Stefan, S-142 62 Trångsund (SE)
(74) Representative: Hopfgarten, Nils
(86) International application number: PCT/SE2002/000104
(87) International publication number: WO 2002/058332

(56) References cited:
- WO-A1-00/28436
- WO-A1-00/59230
- WO-A1-96/21310
- WO-A1-99/65192
- US-A- 6 044 403

## Description

### TECHNICAL FIELD

The present invention relates to telecommunication networks and especially to service platforms at data communications in one's home and in organizations the size of which are not too large.

### TECHNICAL PROBLEM

In the architectures which are used at present, service platforms are located in that network element which bridges the home network with the access network. These solutions are impaired by a number of problems.

The Residential Gateways, RG, which at present are utilized are expensive from a technical and economical point of view, which in this context relates to the technical and software development which rapidly makes the equipment in need of updating.

The Residential Gateway, RG, constitute a bottleneck with the location referred to, since all traffic has to go through the Residential Gateway, RG, because these do not manage to deal with the demands of certain services (for instance TV or telephony over IP). To build a Residential Gateway, RG, sufficient powerful to manage the demands would make it even more expensive.

The technical length of service of a Residential Gateway, RG, is short because the development in the electronic field, as well as in the field of software, is rapid, which results in that a Residential Gateway, RG, can be expected to have a length of service of maximum two years before it is ripe for exchange. From an economical point of view this is to the detriment of the user if he/she then has to exchange all parts of the RG. For that reason it is of advantage if only these parts which really need to be exchanged are exchanged or upgraded, and that the user does not need to care about the exchange. Further problems with the existing solutions are that different versions of the RG may be in the network, which results in risk for communication problems if these partially or wholly cannot communicate with each other. There therefore is a strong wish that at least those parts of the RG of today whicn have short length of service, or have to be upgraded at short intervals, are maintained centrally and are not depending on respective user's want and ability to take current actions. Further, there are wishes that the number of RGs in the network is kept at a low level to be possible to manage rationally.

The present invention is intended to solve the mentioned problems.

### PRIOR ART

A number of proposals for service platforms for the home are at present examined. One example of such a platform is OSGi, Open Service Gateways initiative. The platform is intended to have ability to include different types of services, for instance services for power control/control of electrical devices in the home, support for plug-and-work technologies, and makes remote connection to the home possible in a safe way. Services are installed and uninstalled dynamically at the user's request, and the services are managed by the platform with a minimum of administration from the user. The matter everybody is discussing today is that this platform should be located in the home together with that network element which bridges between the home network and the access network, a so called Residential Gateway, RG.

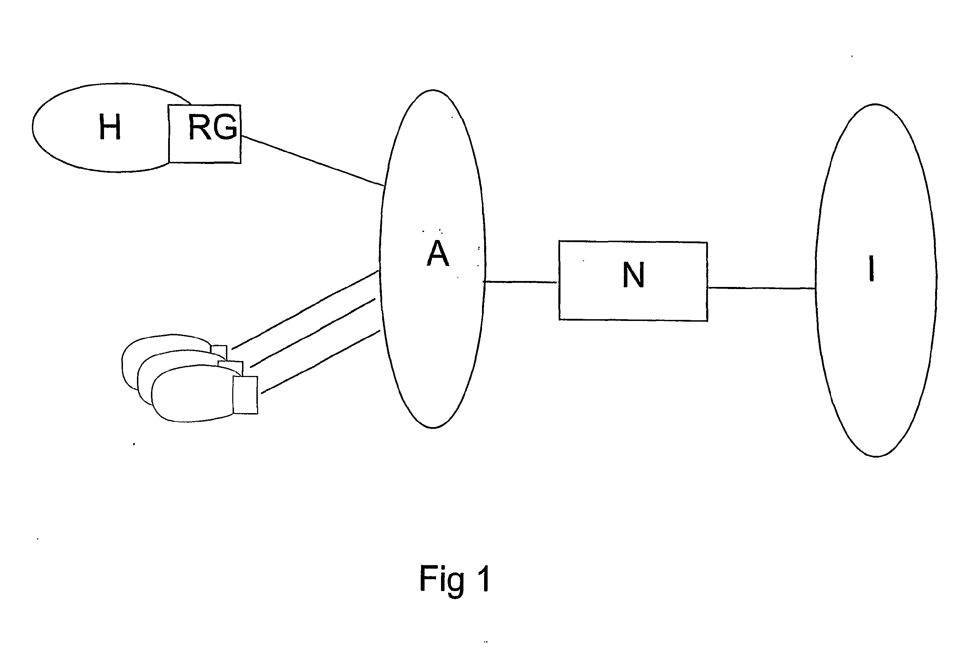

In Figure 1 the above mentioned technology is shown. In a home network, H, one or more computers are included. The computers, which are part of a circuit/circle, are connected towards a home network via a Residential Gateway, RG. The Residential Gateway, RG, constitutes a bridge between the home network and the access network, A. Between the access network, A, and the Internet, I, an access node is introduced. The different service platforms which are needed in this solution are based on the introduction of Residential Gateway, RG, in direct or close connection to the home. Service platforms and network elements are in this case integrated into one component.

WO 99/65192 A1 discloses open horizontal service platforms, where service providers can, via network operators, load software associated with a service onto a dedicated service platform server. The platform server is connected, via LAN, to one or more remote devices.

US 6,044,403 A discloses an architecture which is capable of utilizing the existing twisted pair interface between the customer services equipment and the local office.

### THE SOLUTION

The above-mentioned problems are solved by a system as defined in the enclosed claim 1 and a method as defined in the enclosed claim 12, respectively.

The present invention relates to a system and method at information networks and computer networks (henceforth called telecommunication networks) for creation of customer adapted provision of services. A first device (G), group server, is arranged in the telecommunication network, The device is arranged to define the customer's service access/availability. A second device (S) is arranged to transmit the information individually to the customers. Further, the customers are connected to a network (H). The network (H) includes one or more customers, which customers are arranged to be allocated individually adapted services. The second device (S) is transparent and is used to connect the home network (H) to the access network (A). Control/routing of the services and information to respective user is managed by device (G).

The first device (G) further controls/routes the customers in the network (H). The first device (G) is connected to the access network via a node (N) which is arranged in the telecommunication network before the access network (A). The meaning of this is that the node (N) is located between the access network (A) and the Internet (I) as example of an information network. The information and the services are further routed by the node (N) to respective network (H) on basis of routing/control information provided by the first device (G). In the first device (G), further a number of modules (T) are arranged. Said modules (T) further include definitions for respective customers, which definitions define the service allocation of respective customers. The modules (T) include means which defines a channel allocation which is needed to establish and execute respective services, which respective customers request to utilize during an establishment of respective utilization of a defined set of services. The second device (S) is here further arranged to receive the channels which relate to the for the second device (S) destined channels, and that the second device (S) is arranged to allocate respective channels to respective customers.

The modules (T) are further arranged to, on the one hand, be allocated a general definition of service allocation of respective customers, and on the other hand that the customers, within the frame of this definition, are allowed to provide definitions regarding a utilization of these services. On basis of these definitions, the modules further are arranged to allocate, to respective customers, channels which correspond to the current need. Further, each channel is allocated, according to need, a varying information bandwidth. The information is transmitted to the customers via an information network (I). The second device (S) is further allowed to be a hub or a switch. The second device is allowed to be a single computer in the case the network (H) consists of one single computer.

### ADVANTAGES

The suggested solution has the advantage that it separates the service platform from the network element. The service platform, which need frequent modifications, is easily accessible/available and is not depending on respective user's arbitrariness. This also means that components which are critical for the functionality can be expected to get, if not the same upgrading, at least an upgrading which corresponds to a guaranteed functionality. Further, the problem that the RGs of today do not fulfill the demands for bandwidth at transmission of information is bridged. The at present short service length of the RG does not burden the customer.

The invention further makes it possible that persons in, for instance, a household are allowed to communicate with equipment of different kinds at the own home. At that, different devices such as lighting, electrical devices, doors and windows can be opened or closed, alternatively be locked or unlocked. This provides possibility for the user to control the home or other premises. Further, a server is created which has the functionality of a plurality of sub servers. Each sub server functions as a separate server for a home network (H) and at that has the same functionality as if the sub server had been physically located in connection with respective home network. The home networks are in this connection allowed to relate to both private networks and networks belonging to smaller firms, associations or the like.

### DESCRIPTION OF FIGURES

Figure 1 shows example of solution according to the prior art.

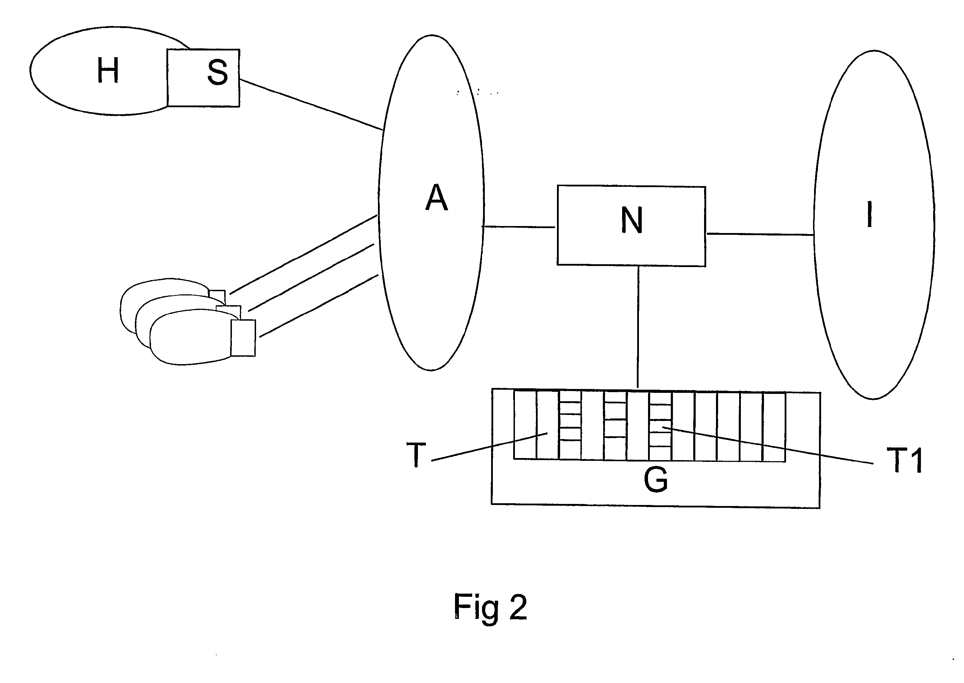

Figure 2 shows the solution according to the present invention.

### PREFERRED EMBODIMENT

In the following, the invention is described on basis of the figures and the terms in them.

The invention is based on that a group server is created, which is based on that the service platform is moved from the network element in the household to a server in the access (access node). This server holds the service platforms for all households in the access. In spite of this, each household shall have only its own platform and not have access to any other's.

The present invention relates to a device for customer adapted provision of services. For the purpose a service platform (G) connected to a node in a communication network is created. The node is connected with an access network (A) in which network elements (S) are connected to a local network (H), to which users are connected. The service platform further includes a number of modules (T) which are individual for each user group. The modules (T) further are divided into a number of sub modules (T1) corresponding to individual users. These sub modules (T1) define the available offer of services of the users. At the establishing of a communication, alternatively during a communication in progress, the user defines the services that shall be utilized, at which the service platform (G) allocates to the user a channel bandwidth which corresponds to the current need.

The solution means that the network element (in the home) can consist of a common hub, switch or the like, and does not constitute any bottleneck.

The solution further is more cost-effective since a plurality of households/users share the same hardware, in the case they are in the same network.

The households/users further are not affected by the technical service length.

According to the invention, a group server (G) is introduced between the access network (A) and the Internet (I). The group server is connected to an access node in the connection between the access network (A) and Internet (I). The group server (G) further includes a number of service platforms (T1) included in a module (T). Each service platform includes a definition for respective users in the system. This means that the service platform defines which services each user shall have access to. One and the same group server (G) consequently is divided into a number of service platforms (T1) which are allocated definitions regarding utilization of services by the network operator, based on the wishes of the users, and on basis of the user's own definitions which are transmitted via computers or terminals in the home. The information which is transmitted to/from a user is controlled/routed by respective service platform (T1) in such a way that the information is routed to the right user and that the respective user is allocated a channel bandwidth which is needed in the specific case.

The connection between the access network (A) and the user's network (H) is made via a network element (S). The network element can consist of a hub, switch or just a computer.

The invention consequently means that a Residential Gateway, RG, is separated into two parts, a network element (S) and a module (T) including a number of service platforms (T1). The network element (S) is in this way allowed to be for instance a hub, switch (consumer switch) or, if the customer only has a PC, a PC.

A user who is connected to a home network, H, intends to utilize services via an information network (I). The information relate to, for instance, information retrieval, communication or film transmission. The different alternatives require different bandwidths for the information transmission. In the system there is a gateway arranged, which includes definitions for which services the user is allowed to utilize and which channel bandwidths that can be allowed. Each user is allocated a bandwidth (T1) in the group server, called service platform. Which bandwidth includes the definitions that are required for different communications for which the user is authorized. The service platform (T1) further has means for reception of information from the network via one in the network arranged node (N). The node transmits information to the service platform regarding available bandwidth in the channels which can be utilized on each occasion.

The home network (H), to which the user is connected, communicates towards the access network (A) via a network element which transmits the information between the home network (H) and the external network. The transmission to respective users in the home network (H) is made according to methods which are previously known by the expert, which for instance include separation between different users in a local network. When the user establishes a communication, information is transmitted via the node (N) to the user's service platform (T1) in the group server (G). Check is after that made whether requested services are available/accessible and that the user is authorized to utilize the services in question. The user's service platform (T1) after that decides which resources shall be allocated for the communication. The allocation is made by information being transmitted to the node (N) about which resources and channels that shall be allocated for the user's communication. Information regarding selected channels etc is transmitted to the home network (H) to make it possible for the users to identify the information they have been allocated, and that other users in the network shall not be able to read the information in question. After that, the user can on the one hand communicate with other users in other home networks, or utilize services of different kinds which are offered via the network.

During the progress of the communication, the service platform (T1) checks continuously, by communication via the node (N), whether the channel bandwidth is sufficient with regard to the communication in question. Further, the service platform (T1) modifies, when necessary, the allocated user's channel bandwidth with the intention to achieve an efficient utilization of the available resources of the network. A session in progress can include a varying need for channels and channel bandwidths, depending on changed service utilization during communication in progress, or as a consequence of that the amount of transmitted information varies by time during the session in progress. The invention can be used to utilize services in existing telecommunication networks, respective in different information networks such as Internet. Further, the invention is utilized, for instance, for control of different functionalities in a home. These functionalities can be locking/unlocking of doors, control of electrical devices, lightning etc in the home or other premises. The invention consequently provides a tool which can be utilized, for instance, in the intelligent homes of the future, or in other contexts where this technology is applicable. Further, the users normally are allocated public and private IP-addresses. The private IP-addresses are only intended to be utilized within the home network (H), whereas the public addresses are utilized at communication outside the home network. The private addresses shall not be transmitted out on, for instance, Internet. Within respective home network, or within specified areas, there further is possibility to transmit information to all within one or more groups, or to defined persons within the groups. The groups at that can partly or wholly overlap each other.

The definitions which are required to control different devices in the home are introduced in respective service platform (T), at which different authorities are allowed to be allocated to each individual according to the definitions in that part of the service platform (T1) which defines the allocation of the services of the individuals.

## Claims

1. A system comprising an access network (A) and a node (N), which access network (A) is connectable to a telecommunication network including an information network (I) via the node (N), and means for defining the service access of the customers and controlling information to customers of a customer network (H), said access network (A) being connectable to the customer network (H), **characterized in that** said means is divided in
a server (G), which comprises a service platform (T, T1), for controlling information or services to customers of said customer network (H), communicatively connected to said node (N) in parallel with said customer network (H) and adapted to transfer data to said node (N) about assignment of resources and channels to said customers for transfer of information from said telecommunication network to said customer network (H), the system being adapted to transfer information between the telecommunication network and the customer network (H) via said node (N) without information passing through said server (G); and
a network element (S) adapted to communicatively connect said customer network (H) to said telecommunication network, and adapted to distribute said information or services to customers of said customer network (H).

2. A system as claimed in claim 1, **characterized in that** the system is adapted to connect to a customer network (H) including one or more customers, and **in that** the system is adapted to allocate individually adapted services to the customers.

3. A system as claimed in claim 1 or 2, **characterized in that** said server (G) is adapted to store data regarding the service access of the customers, which server (G) is adapted to control services and information to respective users of the customer network (H).

4. A system as claimed in any of the previous claims, **characterized in that** said server (G) is arranged to control a plurality of customer networks (H) and the customers which are included in respective customer networks (H).

5. A system as claimed in claim 4, **characterized in that** said node (N) is adapted to control the information and the services to respective customer networks (H) on the basis of control information provided by said server (G).

6. A system as claimed in any of the previous claims, **characterized in that** said server (G) is arranged to include a number of modules (T), which are arranged to define the service access of respective customer group, and **in that** each module (T) comprises sub modules (T1) which are adapted to define service access of each customer.

7. A system as claimed in claim 6, **characterized in that** the sub modules (T1) are arranged to define a channel bandwidth which is necessary for establishing of, and execution of, the services which respective customers request to be utilized during establishing of respective utilization of a defined set of services.

8. A system as claimed in any of the previous claims, **characterized in that** said network element (S) is arranged to receive the channels which relate to said network element's (S) destined channels, and to transparently transmit the information to the customer network (H), for the identification and reception of the information, which is directed to respective customers, by said customers.

9. A system as claimed in claim 7, **characterized in that** the sub modules (T1) are arranged to, on the one hand, be assigned a general definition of the service access of respective customers, and on the other, that the customers, within the frame of this definition, are allowed to provide definitions regarding utilization of these services, and that the sub modules (T1) on the basis of these definitions are arranged to assign, to respective customers, channels which correspond to the current need, and the allocated channel is adapted to be allocated an information bandwidth which varies according to the need.

10. A system as claimed in any of the previous claims, **characterized in that** said network element (S) is a hub, switch or computer.

11. A system as claimed in claim 10, **characterized in that** said network element (S) is a computer in the cases the customer network (H) only serves one computer.

12. A method at a telecommunication network, which telecommunication network includes an information network (I) connected to an access network (A) via a node (N), and means for defining service access of the customers and controlling information to customers of a customer network (H) connected to the access network (A), **characterized in that** the method includes the steps of:
- transfer of data, from a server (G) to said node (N) about assigned resources and channels to said customers for transfer of information from said telecommunication network to said customer network (H), in parallel with the communication connection to said customer network (H);
- transfer of information or services from said telecommunication network to said customer network (H) via said node (N) without passing through said server (G); and
- distribute said information or services to customers of said customer network (H) via a network element (S) which communicatively connects said customer network (H) to said telecommunication network.

13. A method as claimed in claim 12, **characterized in that** the customers are connected to the customer network (H) and are given access to individually adapted services.

14. A method as claimed in any of the claims 12-13, **characterized in that** said server (G) controls a plurality of other customer networks (H), and the customers of respective customer networks (H).

15. A method as claimed in claims 12-14, **characterized in that** the node (N) controls the information and services to respective customer networks (H) on the basis of control data provided by said server (G).

16. A method as claimed in any of the claims 12-15, **characterized in that** a number of modules (T) are arranged in said server (G) and the modules define the service access of different customer groups, that respective customer group is divided into a number of sub modules (T1) which define the service access of individual users, and that the modules (T), respective the sub modules (T1), define a channel bandwidth which is required for, or establishing of and execution of, the services which respective customer groups and customers request to be utilized during establishing of respective utilization of a defined set of services.

17. A method as claimed in claims 16, **characterized in that** the sub modules (T1) are assigned general definition for the service access of respective customers, that the customers, within the frame of this definition, provide definitions regarding a utilization of said services, that the sub modules (T1) on the basis of said definitions assign, to respective customers, channels which correspond to the current need, and that the allocated channel is allocated an information bandwidth which varies according to the need.

## Patentansprüche

1. System, das ein Zugangsnetz (A) und einen Knoten (N), welches Zugangsnetz (A) mit einem Telekommunikationsnetz, das ein Informationsnetz (I) einschließt, über den Knoten (N) verbindbar ist, und Mittel zum Definieren des Dienstzugangs der Kunden und zum Kontrollieren von Information zu Kunden eines Kundennetzwerks (H) einschließt, welches Zugangsnetz (A) mit dem Kundennetz (H) verbindbar ist, **dadurch gekennzeichnet, dass** die Mittel aufgeteilt sind in
einen Server (G), der eine Dienstplattform (T, T1) zum Kontrollieren von Information oder Dienten zu Kunden des Kundennetzes (H) aufweist, der kommunikativ mit den Knoten (N) parallel mit dem Kundennetz (H) verbunden ist und dazu ausgebildet ist, Daten zu dem Knoten (N) über Zuordnung von Ressourcen und Kanälen zu den Kunden zu übertragen, um Information von dem Telekommunikationsnetz zum Kundennetz (H) zu übertragen, wobei das System dazu ausgebildet ist, Information zwischen dem Telekommunikationsnetz und dem Kundennetz (H) über den Knoten (N) zu übertragen, ohne dass Information durch den Server (G) gelangt; und
ein Netzelement (S), das dazu ausgebildet ist, kommunikativ das Kundennetz (H) mit dem Telekommunikationsnetz zu verbinden, und dazu ausgebildet ist, die Information oder Dienste Kunden des Kundennetzes (H) zuzuteilen.

2. System nach Anspruch 1, **dadurch gekennzeichnet, dass** das System dazu ausgebildet ist, zu einem Kundennetz (H) zu verbinden, das einen oder mehrere Kunden einschließt, und dass das System dazu ausgebildet ist, individuell angepasste Dienste den Kunden zuzuteilen.

3. System nach Anspruch 1 oder 2, **dadurch gekennzeichnet, dass** der Server (G) dazu ausgebildet ist, Daten zu speichern, die den Dienstzugang der Kunden betreffen, welcher Server (G) dazu ausgebildet ist, Dienste und Information zu entsprechenden Benutzern des Kundennetzes (H) zu kontrollieren.

4. System nach einem der vorangehenden Ansprüche, **dadurch gekennzeichnet, dass** der Server (G) dazu ausgebildet ist, eine Mehrzahl von Kundennetzen und die Kunden zu kontrollieren, die in entsprechenden Kundennetzen (H) enthalten sind.

5. System nach Anspruch 4, **dadurch gekennzeichnet, dass** der Knoten (N) dazu ausgebildet ist, die Information und die Dienste zu entsprechenden Kundennetzen (H) auf Grund von Kontrollinformation zum kontrollieren, die durch den Server (G) geliefert wird.

6. System nach einem der vorangehenden Ansprüche, **dadurch gekennzeichnet, dass** der Server (G) dazu ausgebildet ist, eine Anzahl von Modulen (T) einzuschließen, die dazu ausgebildet sind, den Dienstzugang einer entsprechenden Kundengruppe zu definieren, und das jedes Modul (T) Untermodule (T1) aufweist, die dazu ausgebildet sind, Dienstzugang jeden Kundens zu definieren.

7. System nach Anspruch 6, **dadurch gekennzeichnet, dass** die Untermodule (T1) dazu ausgebildet sind, eine Kanalbandbreite zu definieren, die zum Einrichten von und Ausführung der Dienste notwendig sind, von denen entsprechende Kunden während der Einrichtung von entsprechender Verwendung eines definierten Satzes von Diensten fordern, dass sie benutzt werden sollen.

8. System nach einem der vorangehenden Ansprüche, **dadurch gekennzeichnet, dass** das Netzelement (S) dazu ausgebildet ist, die Kanäle zu empfanden, die sich auf die für das Netzelement (C) bestimmten Kanäle beziehen, und die Information zum Kundennetz (H) transparent für Identifizierung und Empfang von Information zu übertragen, die durch die Kunden zu entsprechenden Kunden gerichtet ist.

9. System nach Anspruch 7, **dadurch gekennzeichnet, dass** die Untermodule (T1) dazu ausgebildet sind, dass ihnen einerseits eine allgemeine Definition des Dienstzugangs entsprechender Kunden zugeordnet ist, und andererseits, dass es den Kunden innerhalb des Rahmens dieser Definition erlaubt ist, Definitionen zu liefern, die die Verwendung dieser Dienste betreffen, und dass die Untermodule (T1) auf Grund dieser Definitionen dazu ausgebildet sind, entsprechenden Kunden Kanäle zuzuordnen, die dem gegenwärtigen Bedarf entsprechen, und dass der zugeordnete Kanal dazu ausgebildet ist, dass eine Informationsbandbreite zugeteilt wird, die sich mit dem Bedarf verändert.

10. System nach einem der vorangehenden Ansprüche, **dadurch gekennzeichnet, dass** das Netzwerk (S) ein Hub, ein Schalter oder ein Computer ist.

11. System nach Anspruch 10, **dadurch gekennzeichnet, dass** das Netzelement (S) ein Computer in den Fällen ist, bei denen das Kundennetz (H) nur einen Computer bedient.

12. Verfahren bei einem Telekommunikationsnetz, welches Telekommunikationsnetz ein Informationsnetz (I), das mit einem Zugangsnetz (A) über einen Knoten (N) verbunden ist, und Mittel einschließt, um Dienstzugang der Kunden zu definieren und Information zu Kunden eines Kundennetzes (H) zu kontrollieren, das mit dem Zugangsnetz (A) verbunden ist, **dadurch gekenntzeichnet, dass** das Verfahren die Schritte aufweist:
- Daten von einem Server (G) zu dem Knoten (N) über zugeteilte Ressourcen und Kanäle zu den Kunden zu übertragen, um Information von dem Telekommunikationsnetz zu dem Kundennetz (H) parallel mit der Kornmunikationsverbindung zu dem Kundennetz (H) zu übertragen;
- Information oder Dienste von dem Telekommunikationsnetz zu dem Kundennetz (H) über den Knoten (N) zu übertragen, ohne dass diese durch den Server (G) gelangt; und
- die Information oder Dienste zu Kunden des Kundennetzes (H) über ein Netzelement (S) zuzuteilen, das kommunikativ das Kundennetz (H) mit dem Telekommunikationsnetz verbindet.

13. Verfahren nach Anspruch 12, **dadurch gekennzeichnet, dass** die Kunden mit dem Kundennetz (H) verbunden sind und ihnen Zugang zu individuell angepassten Diensten gegeben wird.

14. Verfahren nach einem der Ansprüche 12 bis 13, **dadurch gekennzeichnet, dass** der Server (G) eine Mehrzahl von anderen Kundennetzen (H) und die Kunden entsprechender Kundennetze (H) kontrolliert.

15. Verfahren nach den Ansprüchen 12 bis 14, **dadurch gekennzeichnet, dass** der Knoten (N) die Information und Dienste zu entsprechenden Kundennetzen (H) auf Grund von Kontrolldaten kontrolliert, die durch den Server (G) geliefert werden.

16. Verfahren nach einem der Ansprüche 12 bis 15, **dadurch gekennzeichnet, dass** eine Anzahl von Modulen (T) in dem Server (G) angeordnet sind und die Module den Dienstzugang unterschiedlicher Kundengruppen definieren, dass eine entsprechende Kundengruppe in eine Anzahl von Untermodulen (T1) aufgeteilt ist, die den Dienstzugang individueller Benutzer definieren, und das die Module (T) bzw. die Untermodule (T1) eine Kanalbandbreite definieren, die für Einrichtung oder Ausführung der Dienste erforderlich ist, die entsprechenden Kundengruppen und Kunden während der Einrichtung der entsprechenden Verwendung eines definierten Satzes von Diensten zu benutzen fordern.

17. Verfahren nach Anspruch 16, **dadurch gekennzeichnet, dass** den Untermodulen (T1) allgemeine Definition für den Dienstzugang entsprechender Kunden zugeordnet werden, dass die Kunden innerhalb des Rahmens dieser Definition Definitionen liefern, die eine Verwendung der Dienste betreffen, dass die Untermodule (T1) auf Grund dieser Definitionen den entsprechenden Kunden Kanäle zuordnen, die dem gegenwärtigen Bedarf entsprechen, und dass dem zugeordneten Kanal eine Informationsbandbreite zugeordnet wird, die sich mit dem Bedarf verändert.

## Revendications

1. Système comprenant un réseau d'accès (A) et un noeud (N), lequel réseau d'accès (A) peut être connecté à un réseau de télécommunication comportant un réseau informatique (I) par l'intermédiaire du noeud (N), et des moyens destinés à définir l'accès au service des clients et à commander les informations vers les clients d'un réseau de client (H), ledit réseau d'accès (A) pouvant être connecté au réseau de client (H), **caractérisé en ce que** lesdits moyens sont divisés en :
un serveur (G), qui comprend une plate-forms de service (T, Tl), destiné à commander des informations ou services vers des clients dudit réseau de client (H), connecté afin d'assurer la communication avec ledit noeud (N) parallèlement audit réseau de client (H) et adapté afin de transférer des données vers ledit noeud (N) qui se rapportent aux affectations de ressources et de canaux auxdits clients de manière à assurer le transfert d'informations à partir dudit réseau de télécommunication vers ledit réseau de client (H), le système étant adapté afin de transférer des informations entre le réseau de télécommunication et le réseau de client (H) par l'intermédiaire dudit noeud (N) sans que les informations ne passent par ledit serveur (G) ; et
un élément de réseau (S) adapté afin de connecter en assurant la communication ledit réseau de client (H) audit réseau de télécommunication, et adapté de manière à distribuer lesdites informations ou services aux clients dudit réseau de client (H).

2. Système selon la revendication 1, **caractérisé en ce que** le système est adapté afin de se connecter à un réseau de client (H) comportant un ou plusieurs clients, et **en ce que** le système est adapté de manière à affecter individuellement des services adaptés aux clients.

3. Système selon la revendication 1 ou 2, **caractérisé en ce que** ledit serveur (G) est adapté afin de stocker des données se rapportant à l'accès au service des clients, lequel serveur (G) est adapté de manière à commander des services et informations vers les utilisateurs respectifs du réseau de client (H).

4. Système selon l'une quelconque des revendications précédentes, **caractérisé en ce que** ledit serveur (G) est agencé de manière à commander une pluralité de réseaux de client (H) et les clients qui sont présents dans les réseaux de client (H) respectifs.

5. Système selon la revendication 4, **caractérisé en ce que** ledit noeud (N) est adapté de manière à commander les informations et les services vers les réseaux de client (H) respectifs sur la base d'informations de commande fournies par ledit serveur (G).

6. Système selon l'une quelconque des revendications précédentes, **caractérisé en ce que** ledit serveur (G) est agencé de manière à intégrer un certain nombre de modules (T), qui sont agencés afin de définir l'accès au service d'un groupe de client respectif et **en ce que** chaque module (T) comprend des modules secondaires (T1) qui sont adaptés afin de définir un accès au service de chaque client.

7. Système selon la revendication 6, **caractérisé en ce que** les modules secondaires (T1) sont agencés afin de définir une bande passante de canal qui est nécessaire afin d'assurer l'établissement, et l'exécution, des services dont les clients respectifs demandent l'utilisation au cours de l'établissement de l'utilisation respective d'un jeu de services défini.

8. Système selon l'une quelconque des revendications précédentes, **caractérisé en ce que** ledit élément de réseau (S) est agencé afin de recevoir les canaux qui se rapportent auxdits canaux destinés audit élément de réseau (S), et de transmettre d'une manière transparente les informations vers le réseau de client (H), afin d'assurer l'identification et la réception des informations, qui sont destinées aux clients respectifs, par lesdits clients.

9. Système selon la revendication 7, **caractérisé en ce que** les modules secondaires (T1) sont agencés, d'une part, de manière à être affectés à une définition générale de l'accès au service de clients respectifs, et d'autre part, **en ce que** les clients, dans le cadre de cette définition, sont autorisés à fournir des définitions concernant l'utilisation de ces services, et **en ce que** les modules secondaires (T1) sur la base de ces définitions sont agencés de manière à affecter, aux clients respectifs, des canaux qui correspondent au besoin courant, et le canal affecté est adapté afin de se voir affecté une bande passante d'informations qui varie en fonction des besoins.

10. Système selon l'une quelconque des revendications précédentes,
**caractérisé en ce que** ledit élément de réseau (S) est un concentrateur, un commutateur
ou un ordinateur.

11. Système selon la revendication 10, **caractérisé en ce que** ledit élément de réseau (S) est un ordinateur dans les cas où le réseau de client (H) sert uniquement un ordinateur.

12. Procédé sur un réseau de télécommunication, lequel réseau de télécommunication comporte un réseau d'informations (I) couplé à un réseau d'accès (A) par l'intermédiaire d'un noeud (N), et des moyens destinés à définir l'accès au service des clients et à commander des informations vers les clients d'un réseau de client (H) connecté au réseau d'accès (A), **caractérisé en ce que** le procédé comprend les étapes de :
transfert de données, à partir d'un serveur (G) vers ledit noeud (N), se rapportant à des ressources et canaux affectés audits clients afin d'assurer le transfert d'informations à partir dudit réseau de télécommunication vers ledit réseau de client (H), parallèlement avec la liaison de communication audit réseau de client (H) ;
transfert d'informations ou de services à partir dudit réseau de télécommunication vers ledit réseau de client (H) par l'intermédiaire dudit noeud (N) sans passer par ledit serveur (G) ; et
distribution desdites informations ou services aux clients dudit réseau de client (H) par l'intermédiaire d'un élément de réseau (S) qui relie en assurant la communication ledit réseau de client (H) audit réseau de télécommunication.

13. Procédé selon la revendication 12, **caractérise en ce que** les clients sont connectés au réseau de client (H) et reçoivent un accès individuel aux services adaptés.

14. Procédé selon l'une quelconque des revendications 12 et 13, **caractérisé en ce que** ledit serveur (G) commande une pluralité d'autres réseaux de client (H), et les client de réseaux de client respectifs (H).

15. Système selon l'une quelconque des revendications 12 à 14, **caractérisé en ce que** le noeud (N) commande les informations et services vers des réseaux de client (H) respectifs sur la base de données de commande fournies par ledit serveur (G).

16. Procédé selon l'une quelconque des revendications 12 à 15, **caractérisé en ce qu'**un certain nombre de modules (T) sont agencés sur ledit serveur (G) et les modules définissent l'accès au service de différents groupes de clients, ce groupe de clients respectif est divisé en un certain nombre de modules secondaires (T1) qui définissent l'accès au service d'utilisateurs individuels, et **en ce que** les modules (T), les modules secondaires (T1) respectifs, définissent une bande passante de canal qui est requise pour les services dont les groupes de clients respectifs et clients demandent l'utilisation au cours de l'établissement de l'utilisation respective d'un jeu de services défini, ou permet d'assurer l'établissement et l'exécution de ces derniers.

17. Procédé selon la revendication 16, **caractérisé en ce que** les modules secondaires (T1) sont affectés d'une définition générale pour l'accès au service de clients respectifs, **en ce que** les clients, dans le cadre de cette définition, proposent des définitions se rapportant à une utilisation desdits services, **en ce que** les modules secondaires (T1) sur la base desdites définitions affectent, aux clients respectifs, des canaux qui correspondent aux besoins courants, et **en ce que** le canal affecté est affecté d'une bande passante d'informations en fonction des besoins.
